# EUROPEAN PATENT SPECIFICATION

(11) **EP 2 240 843 B1**
(45) Date of publication and mention of the grant of the patent: **29.04.2015**
(21) Application number: 08869888.1
(22) Date of filing: 06.11.2008
(51) Int. Cl.: G06F 3/01, G06F 3/03, G06F 3/033, G06F 3/0481, G06F 3/0488

(54) **METHOD AND APPARATUS FOR TWO-HANDED COMPUTER USER INTERFACE WITH GESTURE RECOGNITION**
VERFAHREN UND VORRICHTUNG FÜR ZWEIHÄNDIGE COMPUTERSCHNITTSTELLE MIT GESTENERKENNUNG
PROCÉDÉ ET APPAREIL POUR UNE INTERFACE UTILISATEUR D'ORDINATEUR À DEUX MAINS AVEC UNE RECONNAISSANCE DE GESTES

(30) Priority: 31.12.2007 US 17905 P; 30.06.2008 US 164235
(43) Date of publication of application: 20.10.2010
(73) Proprietor: Motorola Mobility LLC, Libertyville, IL 60048 (US)
(72) Inventor: DUNN, Joseph Wesslund, Arlington Heights Illinois 60005 (US); DUNN, Gregory Joseph, Arlington Heights Illinois 60005 (US); SUPER, Boaz J., Westchester Illinois 60154 (US)
(74) Representative: Openshaw, Paul Malcolm
(86) International application number: PCT/US2008/082571
(87) International publication number: WO 2009/088561

(56) References cited:
- WO-A1-00/21023
- DE-A1-102006 037 156
- US-A- 5 798 752
- US-A- 5 798 752
- US-A1- 2003 048 280
- US-A1- 2004 140 954
- US-A1- 2004 140 954
- US-A1- 2005 195 154
- US-A1- 2006 209 021
- US-A1- 2006 209 021
- US-A1- 2007 124 694
- US-A1- 2007 124 694
- US-A1- 2007 165 034
- YEE ET AL: 'Two-handed Interaction on a Tablet Display', [Online] 01 January 2004, XP009175681 TWO-HANDED INTERACTION ON A TABLET DISPLAY, Retrieved from the Internet: <URL:http://zesty.ca/tht/yee-tht-chi2004-sh ort.pdf>

## Description

### BACKGROUND OF THE INVENTION

### Field of the Invention

The invention relates to an electronic device user interface, also known as a human-machine interface, and, more particularly, to a method and apparatus for combining a manipulable input device and a gesture based input device.

### Introduction

A first type of human-machine interface in the art comprises manipulable input devices such as a computer mouse, trackball, trackpad, digitizing pad, touchscreen, touchscreen with stylus, joystick, keypad, keyboard, or other devices that enable users to accurately indicate that they want a functionality to be executed by the machine, for example by clicking a mouse button, and to accurately indicate to the machine a desired position or movement, for example by moving a mouse or depressing an arrow key repeatedly.

A second type of human-machine interface in the art comprises recognizing and tracking gestures, for example but not limited to recognizing the configuration of a hand or hands, recognizing a motion of a hand or hands, or recognizing a changing configuration of a hand or hands over time. It will be understood by those skilled in the art that other body parts may be used instead of or together with hands, and that the recognition of gestures may be aided by the addition of coverings or implements to the body parts; for example, a glove may be worn on the hand or a brightly colored object may be held in a hand. US Patent Applications 20030156756 (Gokturk et. al) and 20030132913 (Issinski) propose using gesture recognition as a computer user interface (UI) in which stereo cameras register finger and hand movements in the space in front of a computer screen.

The first type of user interface has the disadvantage that the user experiences fatigue. This is especially the case when the first type of user interface is a one-handed interface such as a computer mouse. In the case of a computer mouse, one hand is used a great deal, leading to fatigue of that hand, whereas the other hand is underutilized. Another disadvantage of the first type of user interface is that, except in the case of touchscreens and the like, the user is not interacting directly with displayed content, but instead with a device that physically moves on, for example, a mouse pad or desktop instead of the screen. A third disadvantage of the first type of user interface is that, while many user-interface functionalities may be enabled, in many instances, and particularly with one-handed interfaces such as a computer mouse, it is not possible to perform two actions simultaneously, for example simultaneously manipulate two displayed objects in different ways and/or at different locations in the display.

The second type of user interface has an advantage that it allows directly interacting with displayed content, for example, by pointing to a window on a display screen with a finger. The second type of user interface has a disadvantage that it often does not enable the same degree of accuracy as the first type of user interface. For example, a hand moving freely in space cannot match a conventional mouse stabilized on a desktop for precision of cursor movement. Furthermore, the second type of user interface has a disadvantage that machine operations can be triggered inadvertently, as when, for example, the user, or another person in discussion with the user, moves his hand towards the screen without intending to interact with the machine. The inadvertent triggering of machine operations can result in content being altered or files or applications being closed against the wishes of the user.

US 2007/124694 A1 discloses a display including: a display surface for displaying content to a user; a computer system for supplying the content to the display surface for display in a content window on the display surface; and a recognition system for recognizing a gesture of a user and defining at least one of a size, location, and content of the content window on the display surface based on the recognized gesture. The display can be a display mirror for reflecting an image of the user at least when the content is not being displayed. Furthermore, the gesture can be a hand gesture of the user.

US 2006/209021 A1 discloses a virtual mouse driving apparatus and method for processing a variety of gesture commands as equivalent mouse commands based on two-handed gesture information obtained by a video camera are provided. The virtual mouse driving method includes: keeping track of an input gesture input with the video camera; removing a background portion of the input gesture image and extracting a left-hand region and a right-hand region from the input gesture image whose background portion has been removed; recognizing a left-hand gesture and a right-hand gesture from the extracted left-hand region and the extracted right-hand region, respectively, and recognizing gesture commands corresponding to the recognition results; and executing the recognized gesture commands.

YEE ET AL: Two-handed Interaction on a Tablet Display, 01 January 2004, Discloses a touchscreen that can be overlaid on a tablet computer to support asymmetric two-handed interaction in which the non-preferred hand operates the touchscreen and the preferred hand uses a stylus. The result is a portable device that allows both hands to interact directly with the display, easily constructed from commonly available hardware. The method for tracking the independent motions of both hands is described. A wide variety of existing two-handed interaction techniques can be used on this platform, as well as some new ones that exploit the configurability of touchscreen interfaces. Informal tests show that, when the non-preferred hand performs simple actions, users find direct manipulation on the display with both hands to be comfortable, natural, and efficient.

US 2005/195154 A1 discloses a system and method that facilitates navigating smoothly and gracefully through any type of content viewable on portable devices such as cell-phones, PDAs, and/or any other hybrids thereof. In addition, such navigation can be performed while preserving perspective and context with respect to a larger amount of content. Pointing devices can also be used to navigate through content-the amount or detail of the content being dependent on the speed of the pointing device. Additionally, a semi-transparent overview of content can be overlaid a zoomed-in portion of content to provide perspective to the zoomed in portion. Content shown in the semi-transparent overview can depend on the location of the pointing device with respect to the content.

For the reasons stated above, and for other reasons stated below which will become apparent to those skilled in the art upon reading and understanding the present specification, there is a need in the art for a human-machine interface that combines the advantages and mitigates the disadvantages of the first and second types of user interface.

### SUMMARY OF THE INVENTION

A method and apparatus for manipulating displayed content using the first and second types of human-machine interface in combination, for example a manipulable device such as a mouse and a gesture based input device such as one comprising a camera, are disclosed.

The disclosed invention addresses the disadvantages of the first type of user interface and the second type of user interface by dividing machine operations into two sets and enabling control of a first set and a second set via the first type of user interface and enabling control of only the second set via the second type of user interface. In a preferred embodiment, one hand controls the first set and the other hand controls the second set, using the first and second types of human-machine interfaces, respectively. In a preferred embodiment, the first set and second set of machine operations would be enabled via a mouse interface and the second set of machine operations would be enabled via a stereo camera based hand gesture recognition interface.

In a preferred embodiment, the apparatus has a manipulable input device capable of interacting with displayed content and visualization of the displayed content. Additionally, the apparatus has a gesture based input device with access to only the visualization of the displayed content. In a possible embodiment, the gesture-based inputs do not require precise positioning. The gesture based inputs are "non-destructive", that is, the inputs affect only the visualisation of the displayed content, and moreover the alteration of the visualization is temporary, so the user does not have to worry about unintentionally closing files or altering content when pointing at the screen without any intent of invoking user interface functions.

### BRIEF DESCRIPTION OF THE DRAWINGS

In order to describe the manner in which the above-recited and other advantages and features of the invention can be obtained, a more particular description of the invention briefly described above will be rendered by reference to specific embodiments thereof which are illustrated in the appended drawings. Understanding that these drawings depict only typical embodiments of the invention and are not therefore to be considered to be limiting of its scope, the invention will be described and explained with additional specificity and detail through the use of the accompanying drawings in which:
FIG. 1 is a block diagram of a hardware and operating environment in which different embodiments can be practiced;
FIG. 2 illustrates an exemplary diagram of a user interface, gesture based input device, and manipulable device in accordance with a possible embodiment of the invention;
FIG. 3 illustrates a zoom feature being invoked by a gesture from a user through a vision based gesture based input device in accordance with a possible embodiment of the invention;
FIG. 4 illustrates an exemplary block diagram of a processing device for implementing a dual input interface in accordance with a possible embodiment of the invention;
FIG. 5 is an exemplary flowchart illustrating a method for processing received inputs from a manipulable device and a gesture based input device in accordance with one possible embodiment of the invention; and
FIG. 6 is an illustration of a zoom feature in accordance with one possible embodiment of the invention.

### DETAILED DESCRIPTION OF THE INVENTION

Additional features and advantages of the invention will be set forth in the description which follows. The features and advantages of the invention may be realized and obtained by means of the instruments and combinations particularly pointed out in the appended claims. These and other features of the present invention will become more fully apparent from the following description and appended claims.

Various embodiments of the invention are discussed in detail below. While specific implementations are discussed, it should be understood that this is done for illustration purposes only. A person skilled in the relevant art will recognize that other components and configurations may be used without parting from the scope of the invention.

The invention comprises a variety of embodiments, such as a method and apparatus and other embodiments that relate to the basic concepts of the invention.

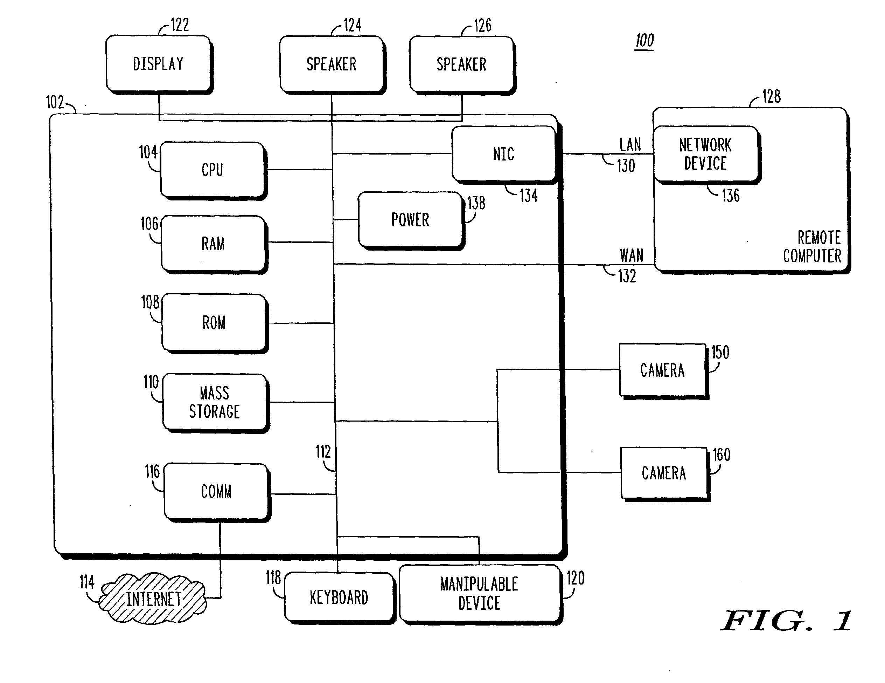

FIG. 1 is a block diagram of a hardware and operating environment 100 in which different embodiments can be practiced. The description of FIG. 1 provides an overview of computer hardware and a suitable computing environment in conjunction with which some embodiments can be implemented. Embodiments are described in terms of a computer executing computer-executable instructions. However, some embodiments can be implemented entirely in computer hardware in which the computer-executable instructions are implemented in read-only memory. Some embodiments can also be implemented in client/server computing environments where remote devices that perform tasks are linked through a communications network. Program modules can be located in both local and remote memory storage devices in a distributed computing environment.

Computer 102 includes a processor 104, commercially available from Intel, Freescale, Cyrix, and others. Computer 102 also includes random-access memory (RAM) 106, read-only memory (ROM) 108, and one or more mass storage devices 110, and a system bus 112 that operatively couples various system components to the processing unit 104. The memory 106, 108, and mass storage devices 110 are types of computer-accessible media. Mass storage devices 110 are more specifically types of nonvolatile computer-accessible media and can include one or more hard disk drives, flash memory, floppy disk drives, optical disk drives, and tape cartridge drives. The processor 104 executes computer programs stored on the computer-accessible media.

Computer 102 can be communicatively connected to the Internet 114 via a communication device 116. Internet 114 connectivity is well known within the art. In one embodiment, communication device 116 is an Ethernet® or similar hardware network card connected to a local-area network (LAN) that itself is connected to the Internet via what is known in the art as a "direct connection" (e.g., T1 line, etc.).

A user enters commands and information into the computer 102 through input devices such as a keyboard 118 or a manipulable device 120. The keyboard 118 permits entry of textual information into computer 102, as known within the art, and embodiments are not limited to any particular type of keyboard. Manipulable device 120 permits the control of a screen printer provided by a graphical user interface (GUI). Embodiments are not limited to any particular manipulable device 120. Such devices include a computer mouse, trackball, trackpad, digitizing pad, touchscreen, touchscreen with stylus, joystick, or other devices that enable users to accurately indicate that they want a functionality to be executed by the machine.

In some embodiments, computer 102 is operatively coupled to a display device 122. Display device 122 permits the display of information, including computer, video and other information, for viewing by a user of the computer. Embodiments are not limited to any particular display device 122. Examples of display devices include cathode ray tube (CRT) displays, as well as flat panel displays such as liquid crystal displays (LCD's). In addition to a display device, computers typically include other peripheral input/output devices such as printers (not shown). Speakers 124 and 126 provide audio output of signals. Speakers 124 and 126 are also connected to the system bus 112.

Computer 102 also includes an operating system (not shown) that is stored on the computer-accessible media RAM 106, ROM 108, and mass storage device 110, and is executed by the processor 104. Examples of operating systems include Microsoft Windows®, Apple MacOS®, Linus®, and UNIX®. Examples are not limited to any particular operating system, however, and the construction and use of such operating systems are well known within the art.

Embodiments of computer 102 are not limited to any type of computer 102. In varying embodiments, computer 102 comprises a PC-compatible computer, a MacOS®-compatible computer, a Linuz®-compatible computer, or a UNIX(R)-compatible computer. Computer 102 may be a desktop computer, a laptop, handheld, or other portable computer, a wireless communication device such as a cellular telephone or messaging device, a television with a set-top box, or any other type of industrial or consumer device that comprises a user interface. The construction and operation of such computers are well known within the art. Computer 102 also includes power supply 138. Each power supply can be a battery.

Computer 102 can be operated using at least one operating system to provide a human-machine interface comprising a manipulable device 120 such as a computer mouse, trackball, trackpad, digitizing pad, touchscreen, touchscreen with stylus, joystick, keypad, keyboard, or other devices that enable users to accurately indicate that they want a functionality to be executed by the machine and to accurately indicate to the machine a desired position or movement. Computer 102 can have at least one web browser application program executing within at least one operating system, to permit users of computer 102 to access an intranet, an extranet, or Internet world-wide-web pages as addressed by Universal Resource Locator (URL) addresses. Examples of browser application programs include Firefox® and Microsoft Internet Explorer®.

The computer 102 can operate in a networked environment using logical connections to one or more remote computers, such as remote computer 128. These logical connections are achieved by a communication device coupled to, or a part of, the computer 102. Embodiments are not limited to a particular type of communications device. The remote computer 128 can be another computer, a server, a router, a network PC, a client, a peer device, or other common network node. The logical connections depicted in FIG. 1 include a local-area network (LAN) 130 and a wide-area network (WAN) 132. Such networking environments are commonplace in offices, enterprise-wide computer networks, intranets, extranets and the Internet.

When used in a LAN-networking environment, the computer 102 and remote computer 128 are connected to the local network 130 through network interfaces or adapters 134, which is one type of communications device 116. Remote computer 128 also includes a network device 136. When used in a conventional WAN-networking environment, the computer 102 and remote computer 128 communicate with a WAN 132 through modems (not shown). The modem, which can be internal or external, is connected to the system bus 112. In a networked environment, program modules depicted relative to the computer 102, or portions thereof, can be stored in the remote computer 128.

The hardware and operating environment 100 may include a gesture based input device. The gesture based input device may be a vision based input device comprising one or more cameras. In a possible embodiment, hardware and operating environment 100 may include cameras 150 and 160 for capturing first and second images of a scene for developing a stereoscopic view of the scene. If the fields of view of cameras 150 and 160 overlap at least a portion of the same scene, one or more objects of the scene can be seen in both images. The signals or data from the cameras are components of the gesture based input device capable of enabling the user to interact with the visualization of a displayed content, as will be described in greater detail below.

The hardware and the operating environment illustrated in FIG. 1 and the related discussion are intended to provide a brief, general description of a suitable computing environment in which the invention may be implemented. Although not required, the invention will be described, at least in part, in the general context of computer-executable instructions, such as program modules, being executed by the processor, such as a general purpose computer. Generally, program modules include routines, objects, components, data structures, etc. that perform particular tasks or implement particular abstract data types. Moreover, those skilled in the art will appreciate that other embodiments of the invention may be practiced in network computing environments with many types of computer system configurations, including personal computers, hand-held devices, multi-processor systems, microprocessor-based or programmable consumer electronics, network PCs, minicomputers, mainframe computers, and the like. Embodiments may also be practiced in distributed computing environments where tasks are performed by local and remote processing devices that are linked (either by hardwired links, wireless links, or by a combination thereof) through a communications network. In a distributed computing environment, program modules may be located in both local and remote memory storage devices.

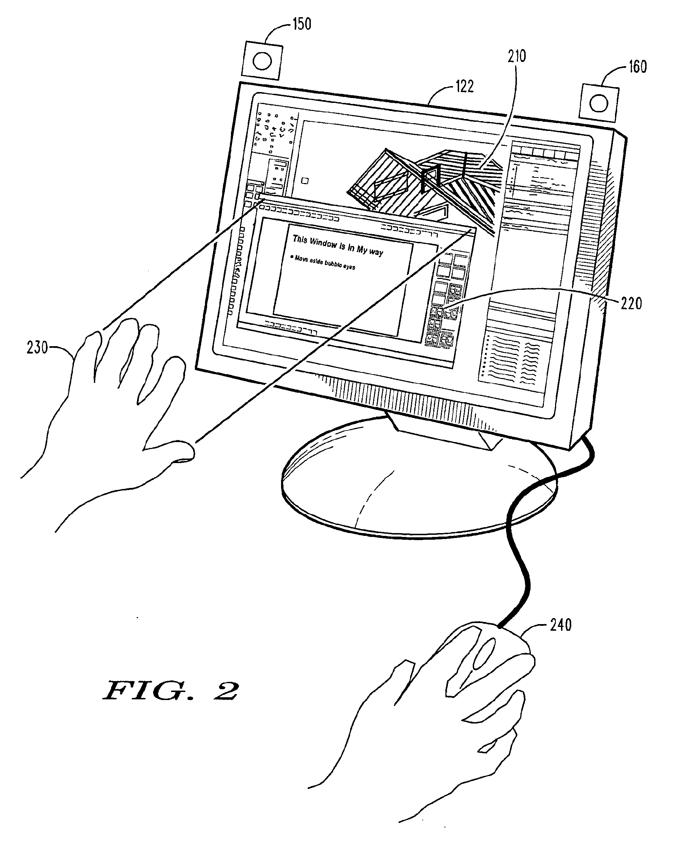

FIG. 2 is an illustration of displayed content 210 on display 122 being interacted with by a user. The user interacts with the displayed content 210 through a manipulable device 240 such as a mouse for invoking a first set and a second set of machine operations and gesture 230 based input device for invoking a second set of machine operations. The first set of machine operations comprises operations for interacting with displayed content. Examples of operations for interacting with displayed content include, but are not limited to, moving a file from one folder to another, deleting a file, renaming a file, editing text, sending an email, opening a chat session, launching an application, or closing an application. The second set of machine operations comprises operations for interacting with the visualization of the displayed content. In FIG. 2 the example shown is the manipulation of a window 220 to allow viewing of other displayed content lying underneath the window 220. In addition to rearranging windows on a display, other examples of operations for interacting with the visualization of the displayed content include, but are not limited to, rearranging the stacking order of windows on a display, inducing transparency in a window so that an underlying window may be viewed, panning across a virtual display 2D or 3D surface that is larger in surface area than the actual display, maximizing or minimizing windows, or changing the magnification of an image or a web page or a portion of an image or web page.

As shown, the user, using the manipulable device 240 in his right hand, has opened an architectural package that is displaying a drawing of a structure. Concurrently with modifying the drawing of the structure using the manipulable device 240 with his right hand, the user employs his free left hand 230 to move window 220 using the gesture based input device. The gesture based input device produces user interface signals such as, but not limited to, location, motion, and selection data. In one possible embodiment, pixel values from camera 150 and camera 160 are combined to provide a depth image. A depth image can provide 3D shape information about a scene. In a depth image, pixel values represent distances of different parts of a scene to a reference point, line, or plane. An object in the foreground can be separated from a background based on pixel values of a depth image, and, optionally, camera pixel values. In the present embodiment, the foreground object is a hand of a user of computer system 100. The captured images from camera 150 and camera 160 are delivered to processor 102 of FIG. 1 for processing. In one embodiment, processor 102 is programmed to compute depth information from the captured images to isolate the foreground object (hand) from the background in the captured images through the depth information, and to generate an output signal responsive to the position and/or movement of the foreground object. The processor 102 is programmed to interpret translational and/or rotational movement of the foreground object to generate a command that would invoke a change in the visualization of the displayed content 210. This change in the visualization of the displayed content can be, but is not limited to, at least one of window manipulation, inducing transparency, panning, zooming, or maximizing, minimizing, or hiding windows. The visualization of the displayed content reverts to its prior state upon cessation of a gesture.

The gestures, such as various hand gestures of a user, are recognized by software running in processor 102. For example, an outstretched hand tracking in a certain direction could indicate moving a window in that direction, a finger pointing in a particular direction and moving inward could indicate zooming in, while moving out could indicate zooming out. The processor 102 may be configured to recognize various tracking patterns, such as various hand-related gestures such as a hand or finger moving from right to left, bottom to top, in and out, etcetera. Alternatively, processor 102 could be trained with an image recognition program to correlate various images or motion patterns to various control actions. In a possible implementation, images of gestures received through camera 150 and camera 160 are compared to at least one of a set of gestures stored in a suitable storage device or correlated to a pre-defined motion pattern recognized by an image recognition program in processor 102. The processor may then forward information identifying the gesture to other devices or applications to invoke an action.

Methods or means for recognizing gestures using, for example but not limited to, cameras, depth imagers, and data gloves are known to those skilled in the art. Such methods and systems typically employ a measurement method or means and a pattern matching or pattern recognition method or means known in the art. A depth imager produces a depth image which stores depths or distances to points in the scene in pixels instead of, or in addition to, color and luminance values. Examples of depth imagers include, but are not limited to, multiple-camera systems with stereoscopic depth processing, laser, sonar, and infrared range finders, structured light systems, and single camera systems in which images taken at different times are combined to yield depth information.

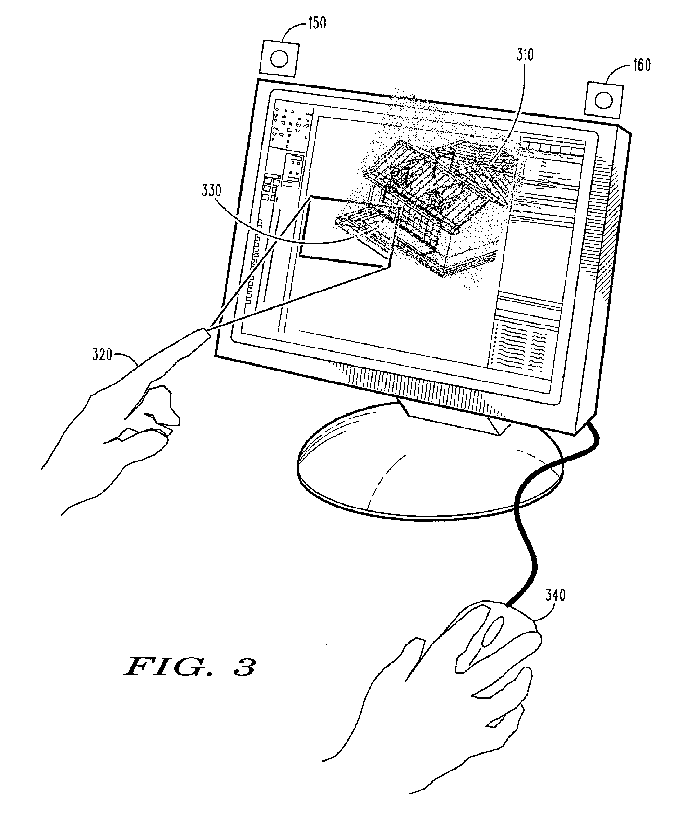

FIG. 3 is an illustration of a gesture 320 invoking a magnifying glass or localized zooming effect at section 330 in the visualization of the displayed content 310. The displayed content 310 can be information, text, graphics, or video from an application that has features that are invoked by manipulable devices and gesture based input devices. In a possible embodiment, the user gesture 320 is captured by camera 150 and camera 160. The processor 102 interprets movement of the gesture 320, for example by responding to inward movement (movement toward the display) by increasing magnification in a fixed size zoom viewing window, or alternatively by increasing the zoom viewing window size while holding magnification constant. When the gesture 320 is ceased or removed from the operational region, the visualization of the displayed content reverts to its prior state. For example, the magnifying glass effect disappears. This "non-destructive" nature of the second set of machine operations is ideally suited to a gesture based user interface because actions of the user or of other persons in discussion with the user could inadvertently and undesirably activate operations through the gesture based input device.

While the magnifying glass is invoked with the left hand via the gesture based input device, the user could operate a computer mouse 340 with the right hand to select a graphic detail or word of text under the magnifying.glass for copying or deletion. Such two-handed interaction provides a powerful, natural, and intuitive user interface. Mouse 340 can alternatively be any manipulable device, such as a trackball, trackpad, digitizing pad, touchscreen, touchscreen with stylus, joystick, keypad, keyboard, or a combination thereof in any number.

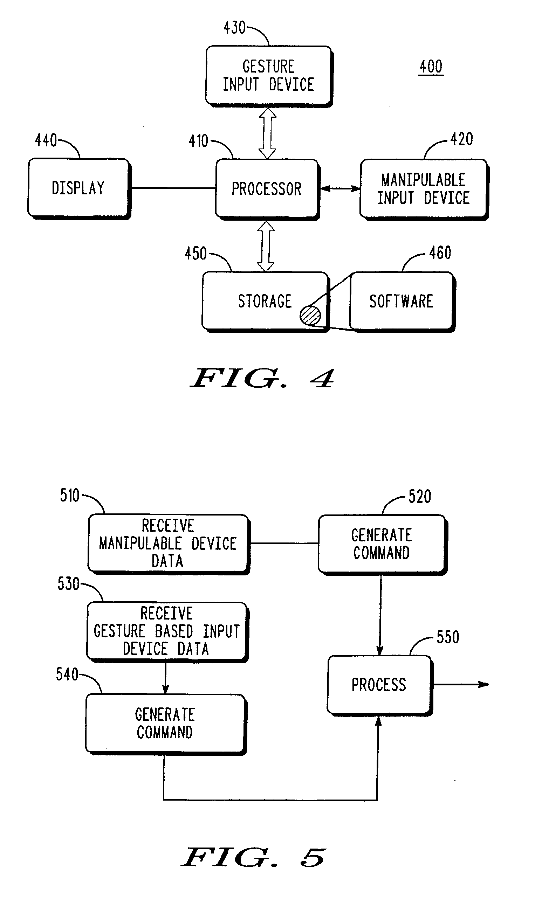

FIG. 4 illustrates a system overview of a system 400 for combining a manipulable input device and a gesture based input device. System 400 comprises a gesture based input device 430, a manipulable input device 420, a processor 410, a display 440, a storage device 450, and a software component 460 capable of changing the visualization of the displayed content such as by window manipulation, inducing transparency, panning, zooming, or maximizing, minimizing, or hiding windows. Storage device 450 can include a one or more cache, ROM, PROM, EPROM, EEPROM, flash, SRAM, computer-readable medium having stored thereon a plurality of instructions, non-volatile memory (NVM), or other devices; however, the memory is not limited thereto. Storage device 450 can hold calibration data, a unique identifier for the attached components such as manipulable input device 420 and gesture based input device 430, or a media access control address, and software for operating the presentation of display content at display 440 and each component attached to processor 102. The software employs methods known in the art for gesture recognition.

For illustrative purposes, the process will be described below in relation to the block diagrams shown in FIGS. 1 and 4.

FIG. 5 is an exemplary flowchart illustrating some of the basic steps associated with process 500 for combining both a manipulable input device and a gesture based input device in accordance with a possible embodiment of the invention. The process contains two threads that can operate asynchronously and, optionally, in parallel. A first thread processing input from a manipulable input device begins at step 510 and continues to step 550 and a second thread processing input from a gesture based input device begins at step 530 and continues to step 550, where the commands from both the manipulable and gesture based input devices are processed.

At step 510, the data or signal from a manipulable device such as a mouse is received for processing. At step 520, the received manipulable device data is processed to generate a command.

At step 530, the data or signal from a gesture based input device such as one comprising a camera or cameras is received for processing. At step 540, the received gesture based input device data is processed to generate a command.

The process goes to step 550 and ends. Here the commands from the gesture based input device or the manipulable input device or both are used to cause the computer 100 to perform a desired operation.

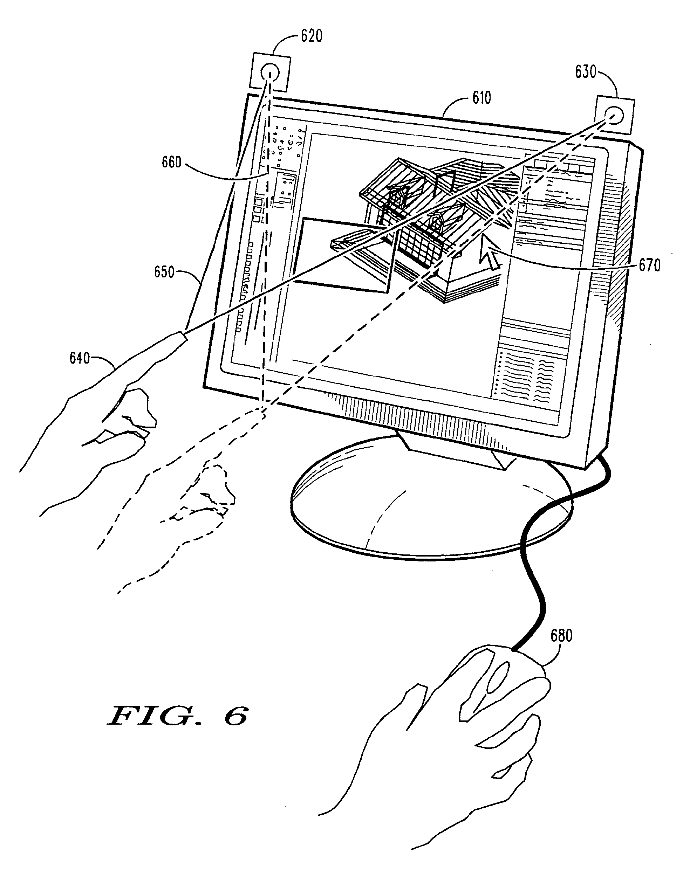

FIG. 6 is an illustration of a possible embodiment of a gesture based input device 600 for optically capturing a user's interaction with the displayed content. A user's moving gesture 640 is shown at two different positions 650 and 660 corresponding to different time instances. These positions can be measured in space by stereoscopic computations using images acquired from a first camera 620 and second camera 630 mounted on a display device 610. A cursor 670 controlled by a manipulable input device 680 is also shown to highlight the combination of the two different forms for interacting with displayed content. It should be noted that the cameras need not be mounted on the display device as shown, but could be mounted on the user or on a separate vehicle as long as they are able to view the gesture. Processor 102 using a depth imaging algorithm then processes the captured frames.

It will be understood by those skilled in the art that other types of gesture based input devices, such as those comprising a single camera and single camera based gesture recognition or tracking methods, may be substituted for the gesture based input device described in the exemplary embodiments.

Embodiments within the scope of the present invention may also include computer-readable media for carrying or having computer-executable instructions or data structures stored thereon. Such computer-readable media can be any available media that can be accessed by a general purpose or special purpose computer. By way of example, and not limitation, such computer-readable media can comprise RAM, ROM, EEPROM, CD-ROM or other optical disk storage, magnetic disk storage or other magnetic storage devices, or any other medium which can be used to carry or store desired program code means in the form of computer-executable instructions or data structures. When information is transferred or provided over a network or another communications connection (either hardwired, wireless, or combination thereof) to a computer, the computer properly views the connection as a computer-readable medium. Thus, any such connection is properly termed a computer-readable medium. Combinations of the above should also be included within the scope of the computer-readable media.

Computer-executable instructions include, for example, instructions and data which cause a general purpose computer, special purpose computer, or special purpose processing device to perform a certain function or group of functions. Computer-executable instructions also include program modules that are executed by computers in stand-alone or network environments. Generally, program modules include routines, programs, objects, components, and data structures, etc. that perform particular tasks or implement particular abstract data types. Computer-executable instructions, associated data structures, and program modules represent examples of the program code means for executing steps of the methods disclosed herein. The particular sequence of such executable instructions or associated data structures represents examples of corresponding acts for implementing the functions described in such steps.

Although the above description may contain specific details, they should not be construed as limiting the claims in any way. Other configurations of the described embodiments of the invention are part of the scope of this invention. For example, the principles of the invention may be applied to each individual user where each user may individually deploy such a system. This enables each user to utilize the benefits of the invention even if any one of the large number of possible applications do not need the functionality described herein. It does not necessarily need to be one system used by all end users. Accordingly, only the appended claims define the invention, rather than any specific examples given.

## Claims

1. A system (400) comprising:
a display (122, 440) capable of displaying content (210, 310);
a manipulable input device (120, 240, 420) capable of enabling a user to interact with the displayed content and a visualization of the displayed content; and
a gesture based input device (430, 600) with-access to only the visualization of the displayed content and being capable of enabling the user to interact only with the visualization of the displayed content and only in a non-destructive way, wherein when interacting with the gesture based input device, the visualization of the displayed content reverts to its prior state upon cessation of a gesture (230, 320, 640), and wherein the gesture based input device is a vision based input device comprising at least one of a stereo camera system (150, 160, 620, 630) and a monocular camera.

2. The system of claim 1, wherein interacting with the visualization of the displayed content comprises at least one of window manipulation, inducing transparency, panning, zooming, or maximizing, minimizing, or hiding windows.

3. The system of claim 1, further comprising:
a processor (104, 410) configured to generate a command based on data output from a gesture based input device, wherein the command instructs the electronic device to perform an action on the visualization of the displayed content.

4. The electronic device of claim 3, wherein the data output from a gesture based input device data is created using at least one of luminance data, color data, and depth imaging data.

5. A method performed by an electronic device, comprising:
enabling a user through a manipulable input device (120, 240, 420) to interact with displayed content (210, 310) and a visualization of the displayed content; and
enabling the user through a gesture based input device (430, 600) with access to only the visualization of the displayed content to interact only with the visualization of the displayed content and only in a non-destructive way, wherein when interacting with the gesture based input device, the visualization of the displayed content reverts to its prior state upon cessation of a gesture (230, 320, 640), and wherein the gesture based input device is a vision based input device comprising at least one of a stereo camera system (150, 160, 620, 630) and a monocular camera.

6. The method of claim 5, wherein interacting with the visualization of the displayed content comprises at least one of window manipulation, inducing transparency, panning, zooming, or maximizing, minimizing, or hiding windows.

## Patentansprüche

1. System (400) umfassend:
eine Anzeige (122, 440), die geeignet ist, Inhalt (210, 310) anzuzeigen;
eine manipulierbare Eingabevorrichtung (120, 240, 420), die geeignet ist, es einem Benutzer zu ermöglichen, mit dem angezeigten Inhalt zu interagieren und den angezeigten Inhalt zu visualisieren; und
eine gestikbasierte Eingabevorrichtung (430, 600) mit Zugang zu nur der Visualisierung des gezeigten Inhalts und die geeignet ist, es dem Benutzer zu ermöglichen, nur mit der Visualisierung des angezeigten Inhalts und nur auf eine nicht destruktive Art zu interagieren, wobei beim Interagieren mit der gestikbasierten Eingabevorrichtung die Visualisierung des angezeigten Inhalts nach dem Beenden einer Geste (230, 320, 640) auf seinen vorigen Zustand zurückfällt und wobei die gestikbasierte Eingabevorrichtung eine sichtbasierte Eingabevorrichtung ist, die zumindest eines der Elemente der Gruppe Stereo Kamera System (150, 160, 620, 630) und Monokularkamera umfasst.

2. System nach Anspruch 1, wobei das Interagieren mit der Visualisierung des gezeigten Inhalts zumindest ein Element der Gruppe Fenstermanipulation, Veranlassen von Transparenz, Schwenken, Zoomen oder Maximieren, Minimieren oder Verstecken von Fenstern umfasst.

3. System nach Anspruch 1 ferner umfassend:
einen Prozessor (104, 410), der ausgebildet ist, einen Befehl basierend auf einem Datenausgang einer gestikbasierten Eingabevorrichtung zu erzeugen, wobei der Befehl die elektronische Vorrichtung dazu anweist, eine Aktion auf die Visualisierung des gezeigten Inhalts auszuführen.

4. Elektronische Vorrichtung nach Anspruch 3, wobei der Datenausgang aus einer gestikbasierten Eingabevorrichtungsdatei durch das Verwenden von zumindest einem Element der Gruppe Helligkeitsdaten, Farbdaten und Tiefenbilddaten erzeugt wird.

5. Verfahren ausgeführt durch eine elektronische Vorrichtung, umfassend:
Ermöglichen, dass ein Benutzer mit dem angezeigten Inhalt (210, 310) und einer Visualisierung des angezeigten Inhalts durch eine manipulierbare Eingabevorrichtung (120, 240, 420) interagieren kann, und;
Ermöglichen, dass der Benutzer durch eine gestikbasierte Eingabevorrichtung (430, 600) mit Zugang auf nur die Visualisierung des gezeigten Inhalts nur mit der Visualisierung des gezeigten Inhalts und nur auf eine nicht destruktive Art interagieren kann, wobei, wenn mit der gestikbasierten Eingabevorrichtung interagiert wird, die Visualisierung des gezeigten Inhalts nach Beendigung einer Geste (230, 320, 640) auf seinen vorigen Zustand zurückfällt und wobei die gestikbasierte Eingabevorrichtung eine sichtbasierte Eingabevorrichtung ist, die zumindest ein Element der Gruppe Stereokamerasystem (150, 160, 620, 630) und Monokularkamera umfasst.

6. Verfahren nach Anspruch 5, wobei das Interagieren mit der Visualisierung des angezeigten Inhalts zumindest ein Element der Gruppe Fenstermanipulation, Veranlassen von Transparenz, Schwenken, Zoomen oder Maximieren, Minimieren oder Verstecken von Fenstern umfasst.

## Revendications

1. Un système (400) comprenant :
un affichage (122, 440) capable d'afficher du contenu (210, 310) ;
un dispositif d'entrée (120, 240, 420) maniable et capable de permettre un utilisateur d'interagir avec le contenu affiché et une visualisation du contenu affiché ; et
un dispositif d'entrée à base de geste (430, 600) avec un accès seulement à la visualisation du contenu affiché et étant capable de permettre l'utilisateur d'interagir seulement avec la visualisation du contenu affiché et seulement d'une façon non-destructive, dans lequel lors d'une interaction avec le dispositif d'entrée à base de geste, la visualisation du contenu affiché revient à son état antérieur lors d'un achèvement d'un geste (230, 320, 640), et dans lequel le dispositif d'entrée à base de geste est un dispositif d'entrée à base de vue comprenant au moins l'un d'entre un système de caméra stéréo (150, 160, 620, 630) ou une caméra monoculaire.

2. Le système selon la revendication 1, dans lequel interagir avec la visualisation du contenu affiché comprend au moins un d'entre manipulation de fenêtre, induire de la transparence, pivoter/recadrer, zoomer, ou maximiser, minimiser, ou cacher des fenêtres.

3. Le système selon la revendication 1, comprenant en outre :
un processeur (104, 410) configuré pour générer une commande à base de données de sortie depuis un dispositif d'entrée à base de geste, dans lequel la commande instruit le dispositif électronique de exécuter une action par rapport à la visualisation du contenu affiché.

4. Le dispositif électronique selon la revendication 3, dans lequel la sortie de données d'un dispositif d'entrée à base de geste est créée en utilisant au moins un d'entre des données de luminance, des données de couleur et des données d'imagerie en profondeur.

5. Un procédé exécuté par un dispositif électronique, comprenant :
permettre un utilisateur à travers d'un dispositif d'entrée maniable (120, 240, 420) d'interagir avec du contenu affiché (210, 310) et une visualisation du contenu affiché ; et
permettre l'utilisateur à travers d'un dispositif d'entrée à base de geste (430, 600) avec de l'accès seulement à la visualisation du contenu affiché d'interagir seulement avec la visualisation du contenu affiché et seulement d'une manière non-destructive, dans lequel lors d'une interaction avec le dispositif d'entrée à base de geste, la visualisation du contenu affiché revient a son état antérieur lors d'un achèvement d'un geste (230, 320, 640), et dans lequel le dispositif d'entrée à base de geste est un dispositif d'entrée à base de vue comprenant au moins un d'entre un système de caméra stéréo (150, 160, 620, 630) et une caméra monoculaire.

6. Le procédé selon la revendication 5, dans lequel interagir avec la visualisation du contenu affiché comprend au moins un d'entre la manipulation de fenêtre, induire de la transparence, pivoter/recadrer, zoomer, ou maximiser, minimiser, ou cacher des fenêtres.
